# EUROPEAN PATENT APPLICATION

(11) **EP 4 525 239 A1**
(43) Date of publication of application: **19.03.2025**
(21) Application number: 22941612.8
(22) Date of filing: 10.05.2022
(51) Int. Cl.: H02H 7/18, H02J 7/00, H01M 10/48

(54) **POWER CONTROL SYSTEM**

(71) Applicant: MITSUBISHI ELECTRIC CORPORATION, Chiyoda-ku Tokyo 100-8310 (JP)
(72) Inventor: PAGE, Frederick, Tokyo 100-8310 (JP); TAHATA, Kazuyori, Tokyo 100-8310 (JP)
(74) Representative: Witte, Weller & Partner Patentanwälte mbB
(86) International application number: PCT/JP2022/019814
(87) International publication number: WO 2023/218530

(57) **Abstract**

A power control system (10A) includes: an energy storage system (21A); and a power converter (20) connected between an alternating-current power system (15) and the energy storage system (21A). The energy storage system (21A) includes a plurality of power storage circuits (50_1A to 50_3A) connected in parallel. The power storage circuit (50_1A) includes one or more power storage units (40u), and a protection circuit (30u) between the power storage unit (40u) and the power converter (20). The protection circuit (30u) is configured to electrically disconnect, in the event of an anomaly at a corresponding power storage unit (40u), the power storage unit (40u) from the power converter (20).

## Description

### TECHNICAL FIELD

The present disclosure relates to a power control system.

### BACKGROUND ART

In the facilities for stabilizing the frequency of an alternating-current (AC) system, the discharge energy of a large capacitor disposed on the direct current (DC) side of the AC system is converted into an AC power by a power converter and the AC power is emitted to the AC system. The AC power of the AC system, in contrast, is converted into a DC power by a power converter, and the DC power is absorbed into a large capacitor as charge energy. The large capacitor is, for example, an electrical double layer capacitor (EDLC), which is also referred to as a supercapacitor or ultracapacitor.

Even in a secondary battery power storage system referred to as a battery energy storage system (BESS), the same functionality as the above facilities can be implemented. Specifically, the discharge energy of a storage battery on the DC side is emitted to the AC system via a power converter, and the AC power of the AC system is absorbed into a storage battery as a charge energy via a power converter.

The stabilization of the frequency, load leveling, etc. of the power system can be expected by interconnecting the power storage device on the DC side to the AC system via a power converter and using the DC energy stored in the power storage device. As a system combining a power converter with, for example, a storage battery in such a way, for example, WO 2009/136641 (PTL 1) discloses a system stabilizing device which has a power converter capable of performing an inverting action and a converting or rectifying action, and a DC charging unit, such as an electric double layer capacitor or a lead storage battery.

### CITATION LIST

### PATENT LITERATURE

PTL 1: WO2009/136641

### SUMMARY OF INVENTION

### TECHNICAL PROBLEM

For example, with an increase of renewable energy power supplies in recent years, there is a tendency to demand a large-output power conversion device. To implement a large-output power conversion device, a system configuration is considered in which a large-capacity energy storage system (ESS) is combined with a power conversion device. ESS having an increased capacity can be achieved by connecting an increased number of power storage elements in series-parallel. Therefore, there is need for a configuration to allow the power converter to continue to operate, while appropriately protecting the power storage elements in the event of an anomaly such as a failure in the ESS associated with the increased number of power storage elements.

An object of a certain aspect of the present disclosure is to provide a power control system which allows a power converter to continue to operate, while protecting the power storage elements within an energy storage system.

### SOLUTION TO PROBLEM

A power control system according to a certain embodiment includes: an energy storage system to store a direct-current power input via a pair of input and output terminals as an energy, and output the energy via the pair of input and output terminals; and a power converter connected between an alternating-current power system and the pair of input and output terminals of the energy storage system. The energy storage system includes a plurality of power storage circuits which are connected in parallel between one of the pair of input and output terminals and the other one of the pair of input and output terminals. The power storage circuit includes: one or more power storage units; and a protection circuit provided in correspondence with the power storage unit, the protection circuit being connected between the power storage unit and the power converter. In an event of an anomaly at corresponding the power storage unit, the protection circuit electrically disconnects the power storage unit from the power converter.

### ADVANTAGEOUS EFFECTS OF INVENTION

According to the power control system of the present disclosure, the power converter is allowed to continue to operate, while protecting the power storage elements within an energy storage system.

### BRIEF DESCRIPTION OF DRAWINGS

Fig. 1 is a block diagram showing a configuration of a power control system.
Fig. 2 is a block diagram showing one example hardware configuration of a control device.
Fig. 3 is a block diagram showing a configuration of a power control system according to Embodiment 1.
Fig. 4 is a block diagram showing one example configuration of a power storage unit.
Fig. 5 is a block diagram showing one example configuration of a protection circuit.
Fig. 6 is a diagram for illustrating a path of a fault current in an energy storage system.
Fig. 7 is a block diagram showing a configuration of a power control system according to Variation 1 of Embodiment 1.
Fig. 8 is a block diagram showing a configuration of a power control system according to Variation 2 of Embodiment 1.
Fig. 9 is a block diagram showing a configuration of a power control system according to Variation 3 of Embodiment 1.
Fig. 10 is a block diagram showing a configuration of a power control system according to Embodiment 2.
Fig. 11 is a block diagram showing a configuration of the power control system according to Embodiment 2.
Fig. 12 is a block diagram showing a configuration of a power control system according to Variation of Embodiment 2.
Fig. 13 is a block diagram showing a configuration of a power control system according to other embodiment.

### DESCRIPTION OF EMBODIMENTS

Hereinafter, embodiments are described, with reference to the accompanying drawings. In the following description, like reference signs refer to like parts. Their names and functionalities are also the same. Thus, detailed description thereof will not be repeated.

### [Underlying Configuration for Embodiments]

### <Configuration of Power Control System >

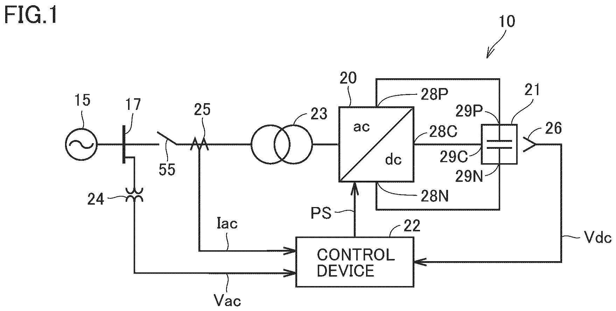

Fig. 1 is a block diagram showing a configuration of a power control system 10. In Fig. 1, two connecting terminals are disposed on the direct-current (DC) side of a power converter 20 that is configured as a self-commutated converter. The power converter 20 can perform bidirectional conversion of converting a DC power into a DC power having a different voltage. The power converter 20 may be of an isolated type or a non-isolated type, and its configuration is not specifically limited. Note that the alternating-current (AC) side of the power converter 20 is connected to a three-phase AC system, and three connecting terminals are therefore provided for u phase, v phase, and w phase. For ease of description, Fig. 1 shows only an AC terminal for one phase.

Referring to Fig. 1, the power control system 10 includes the power converter 20, an energy storage system (ESS) 21, a control device 22, a transformer 23, an AC voltage detector 24, an AC current detector 25, a DC voltage detector 26, and a circuit breaker 55.

The energy storage system 21 is configured to store, as energy, the DC power input via a pair of input and output terminals (i.e., a positive terminal 29P and a negative terminal 29N), and output the stored energy as DC power via the pair of input and output terminals. The energy stored in the energy storage system 21 is exploited for the frequency stabilization and load leveling of the AC power system, and is further exploited as a reserve power.

More specifically, the energy storage system 21 includes multiple power storage elements which are connected in series and in parallel between the positive terminal 29P and the negative terminal 29N. Each power storage element may be, for example, a large capacitor such as an electrical double layer capacitor (EDLC), or a storage battery. Fig. 1 symbolically shows a single power storage element.

The power converter 20 is connected between the AC power system 15 and the pair of input and output terminals of the energy storage system 21. Specifically, the power converter 20 has a pair of DC terminals (i.e., a positive-side DC terminal 28P and a negative-side DC terminal 28N) connected to the pair of input and output terminals (i.e., the positive terminal 29P and the negative terminal 29N), respectively, of the energy storage system 21. Accordingly, the rated DC voltage of the power converter 20 and the rated voltage of the energy storage system 21 are equal. The AC terminal for a respective phase of the power converter 20 is connected to a power line for a corresponding phase of the AC power system 15.

The power converter 20 performs forward conversion of converting an AC current into a DC current, and inverse conversion of converting an DC current into an AC current. Specifically, the power converter 20 converts the AC power of the AC power system 15 into DC power and causes the energy storage system 21 to absorb the DC power as charge energy. Conversely, the power converter 20 converts the DC power of the energy storage system 21 into AC power and emits the AC power as discharge energy to the AC power system 15.

The power converter 20 includes multiple self-turn-off semiconductor devices which are used as switching elements. For example, an insulated gate bipolar transistor (IGBT), a gate commutated turn-off (GCT) thyristor, etc. are used as the self-turn-off semiconductor device. The self-turn-off semiconductor device is connected in anti-parallel to a freewheeling diode. The power converter 20 may be a two-level/three-level, furthermore, multi-level converter, a modular multilevel converter (MMC), a transformer multiplexing, a reactor parallel fashion, and a combination thereof.

The transformer 23 is connected between the AC power system 15 and the power converter 20. The transformer 23 steps up and outputs to the AC power system 15 the AC power output from the power converter 20. For ease of description, Fig. 1 denotes the transformer 23 as a single-phase transformer. However, delta-Y connection, delta-delta connection, or delta-delta-Y connection, etc. is used in the actual connection of a three-phase transformer. If the power converter 20 is capable of outputting a high voltage AC voltage, such as a modular multilevel converter, an interconnection reactor may be provided, instead of the transformer 23.

The AC voltage detector 24 detects an AC voltage Vac at a point of interconnection 17 to the AC power system 15. For example, a voltage transformer is used as the AC voltage detector 24.

The AC current detector 25 detects an AC current Iac flowing between the point of interconnection 17 and the transformer 23. For example, a current transformer is used as the AC current detector 25.

The DC voltage detector 26 detects a DC voltage Vdc between the pair of the input and output terminals (i.e., the positive terminal 29P and the negative terminal 29N) of the energy storage system 21.

Based on the detected AC voltage Vac, AC current Iac, and DC voltage Vdc, the control device 22 generates a control signal (e.g., a pulse width modulation signal) PS for controlling the operation of the power converter 20. The control device 22 controls the operation of the power converter 20, thereby controlling the charging and discharging of the energy storage system 21. In normal operation, the control device 22 performs the following control.

Based on a fundamental frequency of the AC power system 15, determined from the AC voltage Vac, the control device 22 performs automated frequency tuning for approximating the detected fundamental frequency to the rated value. The control device 22 performs automated DC voltage regulation for approximating the detection value of the DC voltage Vdc of the energy storage system 21 to a DC voltage target value. In this case, the voltage target value reduces if the active power is emitted to the AC power system 15. The voltage target value increases if the active power is absorbed from the AC power system 15. The automated frequency tuning and the automated DC voltage regulation set an active power target value Pref.

Based on the detection value of the AC voltage Vac, the control device 22 performs automated AC voltage regulation for approximating the detection value of the AC voltage Vac to the rated value. Based on a reactive power measurement value that is calculated from detection values of the AC voltage Vac and the AC current Iac, the control device 22 further performs automated reactive power tuning for approximating the reactive power measurement value to a target value. The automated AC voltage regulation and the automated reactive power tuning set a reactive power target value Qref.

The control device 22 performs variable transformation on the detection value of a three-phase AC current Iac to calculate an active current component and a reactive current component. Similarly, the control device 22 performs variable transformation on the detection value of a three-phase AC voltage Vac to calculate an active voltage component and a reactive voltage component. Based on the calculated active current component, reactive current component, active voltage component, and reactive voltage component, the control device 22 generates a voltage command value Vref for each phase of the power converter 20 so that the active power target value Pref and the reactive power target value Qref can be obtained.

The control device 22 compares the voltage command value Vref and a carrier signal to generate the PWM signal PS. The PWM signal PS is supplied to control electrodes of the self-turn-off semiconductor devices included in the power converter 20.

The circuit breaker 55 is connected between the AC power system 15 and the power converter 20. In the example of Fig. 1, the circuit breaker 55 is connected between the point of interconnection 17 and the transformer 23.

### <Hardware Configuration of Control Device>

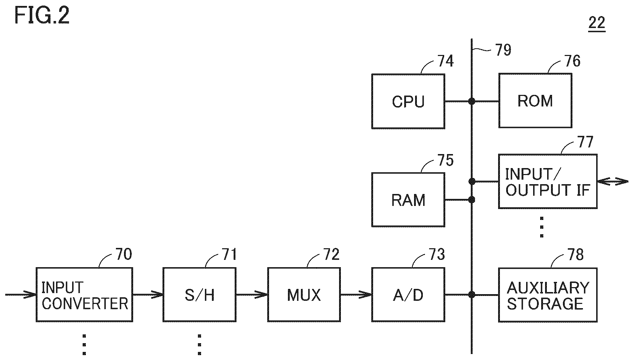

Fig. 2 is a block diagram showing one example hardware configuration of the control device 22. Fig. 2 shows an example in which the control device 22 is configured of a computer.

Referring to Fig. 2, the control device 22 includes one or more input converters 70, one or more sample and hold circuits 71, a multiplexer (MUX) 72, and an analog to digital (A/D) converter 73. The control device 22 also includes one or more central processing unit (CPU) 74, a random access memory (RAM) 75, and a read only memory (ROM) 76. The control device 22 further includes one or more input/output (I/O) interfaces 77, an auxiliary storage 78, and a bus 79 interconnecting the components described above.

The input converter 70 has an auxiliary transformer for each input channel. Each auxiliary transformer converts the detection signal by each electrical quantity detector of Fig. 1 into a signal having a voltage level suited for the subsequent signal processing.

The sample and hold circuit 71 is provided for each input converter 70. The sample and hold circuit 71 samples and holds, at a prescribed sampling frequency, a signal representing an electrical quantity received from a corresponding input converter 70.

The multiplexer 72 subsequently selects the signals held by the sample and hold circuits 71. The A/D converter 73 converts the signal selected by the multiplexer 72 into a digital value. Note that multiple A/D converters 73 may be provided to perform an analog-to-digital conversion on the detection signals at multiple input channels in a parallel fashion.

The CPU 74 controls the entirety of the control device 22, and performs arithmetic processing in accordance with programs. The RAM 75, as a volatile memory, and the ROM 76, as a nonvolatile memory, are used as primarily storages of the CPU 74. The ROM 76 stores programs, and settings values for the signal processing, etc. The auxiliary storage 78 is a larger-scale nonvolatile memory, as compared to the ROM 76, and stores programs and electrical quantity detection value data, etc.

The I/O interface 77 is an interface circuit for communications between the CPU 74 and external devices.

Note that at least a portion of the control device 22 may be configured of a circuit, such as a field programmable gate array (FPGA) and an application specific integrated circuit (ASIC), etc. At least a portion of the control device 22 can also be configured of an analog circuit.

### Embodiment 1.

The power control system 10 according to Embodiment 1 will be described with respect to a configuration in which a power storage unit, whose anomaly due to a fault or the like is detected within the energy storage system 21, is detached by the control device 22 from the energy storage system 21 and the power converter 20.

### <Configuration of Energy Storage System>

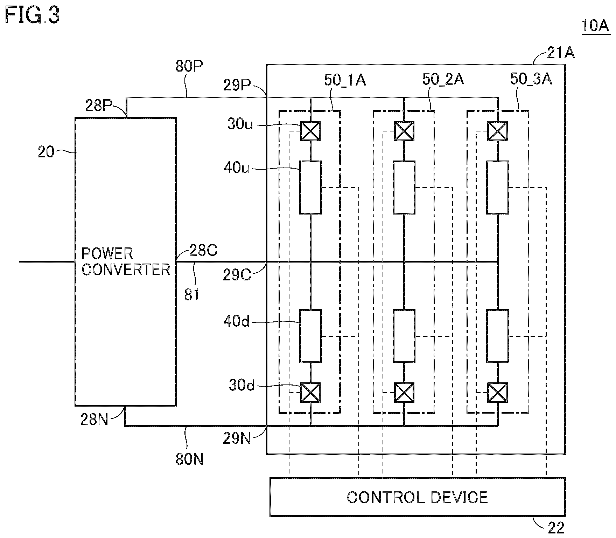

Fig. 3 is a block diagram showing a configuration of the power control system according to Embodiment 1. Referring to Fig. 3, for convenience, the symbol "A" is added to refer to the energy storage system 21A of the power control system 10A, while the energy storage system 21A corresponds to the energy storage system 21 of Fig. 1, as well as in the following figures.

In order to implement a grid forming control that allows power to be supplied according to variations in demand, the input/output of a high-power active power needs to be performed at high speed. In order to configure a large-capacity energy storage system capable of realizing this, a large number of power storage elements need to be connected in series-parallel. In the event of a failure of a power storage unit that is included in the large-capacity energy storage system having such a large number of power storage elements, if the entire energy storage system is detached from the power converter 20, the difference in output between the power converter 20 being in operation and being stopped increases, causing a greater impact on the AC power system. Thus, In the event of a failure in a power storage unit, the energy storage system 21A detaches only that power storage unit 40 from the power converter 20.

The energy storage system 21A includes multiple power storage circuits 50_1A, 50_2A, and 50_3A (hereinafter, also collectively referred to as "a power storage circuit 50"), which are connected in parallel between the positive terminal 29P and the negative terminal 29N. The power storage circuit 50 includes protection circuits 30u and 30d (hereinafter, also collectively referred to as "a protection circuit 30"), and power storage units 40u and 40d (hereinafter, also collectively referred to as "a power storage unit 40"). For ease of illustration, Fig. 1 collectively illustrates some of signal lines between the respective power storage units 40 and the control device 22, and some of signal lines between the control device 22 and the protection circuit 30. In practice, however, the signal line is provided for each power storage unit 40 and each protection circuit 30.

The protection circuit 30 is provided in correspondence with the power storage unit 40, and connected between the power storage unit 40 and the power converter 20. Specifically, in the energy storage system 21A, the protection circuit 30u is provided in correspondence with the power storage unit 40u, and the protection circuit 30d is provided in correspondence with the power storage unit 40d.

The protection circuits 30u, 30d and the power storage units 40u, 40d are connected in series. Specifically, the power storage unit 40u has one end (e.g., an upper end) connected to the protection circuit 30u, and the other end (e.g., a lower end) connected to a neutral line 81 (or a terminal 29C) and the power storage unit 40d. The power storage unit 40d has an upper end connected to the neutral line 81 and the power storage unit 40u, and a lower end connected to the protection circuit 30d. The protection circuit 30u has an upper end connected to the positive-side DC terminal 28P of the power converter 20 via the positive terminal 29P and a positive busbar 80P. The protection circuit 30d has a lower end connected to the negative-side DC terminal 28N of the power converter 20 via the negative terminal 29N and a negative busbar 80N.

The positive terminal 29P of the energy storage system 21A and the positive-side DC terminal 28P of the power converter 20 are connected together via the positive busbar 80P. The negative terminal 29N of the energy storage system 21A and the negative-side DC terminal 28N of the power converter 20 are connected together via the negative busbar 80N. The terminal 29C of the energy storage system 21A and a neutral 28C of the power converter 20 are connected together via the neutral line 81.

The control device 22 receives state information indicating a state of the power storage unit 40 from the power storage unit 40, and monitors states of the power storage units 40 included in the respective power storage circuits 50. The state information includes a voltage value and a temperature of a power storage element included in the power storage unit 40.

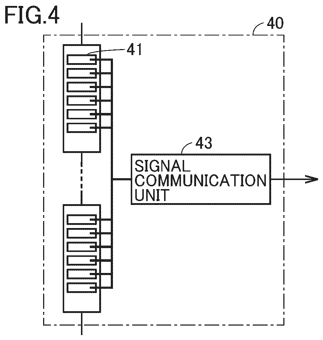

Fig. 4 is a block diagram showing one example configuration of the power storage unit 40. Referring to Fig. 4, the power storage unit 40 includes multiple power storage elements 41 and a signal communication unit 43. The power storage elements 41 are connected in series.

The signal communication unit 43 obtains state signals indicating states of the power storage elements 41. Specifically, the signal communication unit 43 receives the state signal from a detector (not shown) detecting the state of the respective power storage element 41. The state signal includes a signal indicating a voltage of the power storage element 41, and a signal indicating a temperature of the power storage element 41.

The signal communication unit 43 calculates a state representative value representing the states of the respective power storage elements 41, based on the state signals of the respective power storage elements 41. For example, the signal communication unit 43 calculates the average voltage value of the maximum voltage values of the respective power storage elements 41 as a state representative value, based on the signals indicating the voltages of the respective power storage elements 41. The signal communication unit 43 also calculates the maximum temperature of the respective power storage elements 41 as a state representative value, based on the signals indicating the temperatures of the respective power storage elements 41.

The signal communication unit 43 transmits the calculated state representative values to the control device 22. The control device 22 detects the presence or absence of an anomaly of the power storage unit 40, based on the state representative value. A case is now described where the state representative value is the average voltage value of the respective power storage elements 41. If the average voltage value is greater than or equal to a specified voltage value, the control device 22 determines that an anomaly has occurred at the power storage unit 40 (i.e., detects an anomaly of the power storage unit 40). The approach is similar for the case where the state representative value is the maximum voltage value of the respective power storage elements 41.

Next, a case is described where the state representative value is the maximum temperature of the respective power storage elements 41. If the maximum temperature is greater than or equal to a specified temperature, the control device 22 determines that an anomaly has occurred at the power storage unit 40. Typically, the control device 22 determines that a fault (e.g., a ground fault accident, etc.) has occurred at the power storage unit 40 within the energy storage system 21A.

According to the configuration of Fig. 4, the signal communication unit 43 calculates and transmits the representative value of the states of the respective power storage elements 41 to the control device 22. Therefore, a reduced number of signals are transmitted from the power storage unit 40 to the control device 22. Moreover, as compared to directly transmitting the signals from the respective power storage elements 41 to the control device 22, the number of signal lines can be reduced too. This can reduce the size of the entire system.

Referring, again, to Fig. 3, the protection circuit 30 is configured to electrically disconnect the power storage unit 40 from the power converter 20 in the event of an anomaly in a corresponding power storage unit 40.

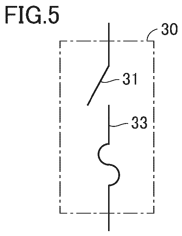

Fig. 5 is a block diagram showing one example configuration of the protection circuit 30. Referring to Fig. 5, the protection circuit 30 includes a switch 31 and a fuse 33. The switch 31 and the fuse 33 are connected in series. The switch 31 is, for example, a circuit breaker or an isolator. The fuse 33 is blown out when a current greater than or equal to a threshold flows therethrough.

If the control device 22 detects an anomaly of one (e.g., the power storage unit 40u) of the respective power storage units 40, the control device 22 determines the occurrence of a fault at the power storage unit 40 in which the anomaly has been detected. In this case, a large fault current flows into the power storage unit 40. Thus, the power storage unit 40 needs to be detached from the power converter 20. Accordingly, the control device 22 transmits, to a protection circuit 30 (e.g., the protection circuit 30u) corresponding to the power storage unit 40, command information (e.g., open command information) for electrically disconnecting the power storage unit 40 from the power converter 20. Specifically, the command information is output to the switch 31 of the protection circuit 30. The switch 31 is opened according to the command information. This electrically disconnects the power storage unit 40u from the power converter 20.

The protection circuit 30 is configured of the switch 31 and the fuse 33 combined together. The protection circuit 30 configured as such has the following advantageous effects over a protection circuit configured of the switch 31 only.

For example, if an element having a small internal resistance, such as an electric double layer capacitor, is applied as the power storage element, the short-circuit current rises fast and the peak value is large. In addition, while depending on a resistance value, an inductance value, and a capacitance value of a fault current loop, the fault current can have a direct waveform (i.e., can have a waveform that creates no zeros). Blocking such a fault current at a high speed with the switch 31 requires a DC circuit breaker that has a large blockade current rating, resulting in increasing the size of the protection circuit. However, since the protection circuit 30 includes the fuse 33, in addition to the switch 31, in the event of a fault, the switch 31 can reliably detach a fault circuit, while the fuse 33 blocks the fault current at a high speed. Moreover, since there is no need to use a DC circuit breaker having a large blockade current rating, the protection circuit 30 can be reduced in size and the cost of the switch 31 can be reduced.

Referring, again, to Fig. 3, for example, assume that a fault occurs at the power storage unit 40u. The control device 22 detects an anomaly of the power storage unit 40u and outputs an open command to the protection circuit 30u. This causes the switch 31 of the protection circuit 30u to electrically disconnect the power storage unit 40u from the power converter 20. The remaining healthy power storage units 40 (e.g., the power storage unit 40d of the power storage circuit 50_1, and the respective power storage units 40 of the power storage circuits 50_2 and 50_3) remain in electrical connection with the power converter 20. Therefore, the power control system 10A (e.g., the power converter 20) can continue to operate.

Note that, in the above case, only the power storage unit 40u in the power storage circuit 50_1 is electrically disconnected and the power storage unit 40d remains in connection with the power converter 20, causing an imbalance in power storage capacities above the neutral line 81 and below the neutral line 81 in the energy storage system 21A.

Thus, to facilitate the control of the power converter 20, one of the power storage units 40d connected between the neutral line 81 and the negative terminal 29N may additionally be electrically disconnected from the power converter 20 in order to balance the upper power storage capacities and the lower power storage capacities. For example, the control device 22 may transmit the open command to the protection circuit 30d provided in correspondence with the power storage unit 40d of the power storage circuit 50_1 to detach the power storage unit 40d from the power converter 20 and the energy storage system 21A. Note that the control device 22 may transmit the open command to the protection circuit 30d of the power storage circuit 50_2 or the power storage circuit 50_3. This allows the upper power storage capacities and the lower power storage capacities to be balanced.

According to the energy storage system 21A, even in the event of a fault in the power storage unit 40, there is no need to detach the entire energy storage system 21A from the power converter 20 for a long period of time, and the power converter 20 is allowed to continue to operate, using the healthy power storage units 40, resulting in improved reliability and availability of the entirety of the power control system.

### (Variation 1)

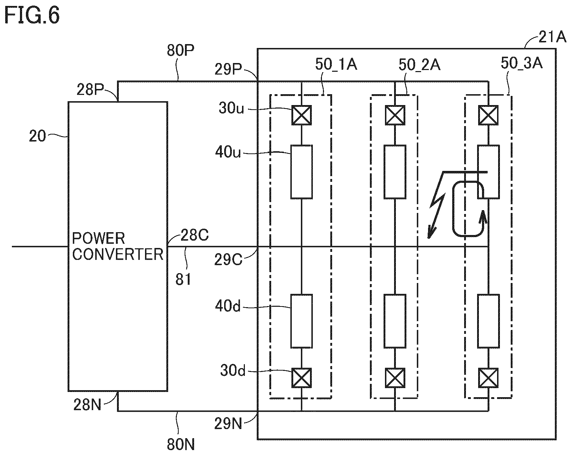

According to the energy storage system 21A of Fig. 5 described above, while the power storage unit 40 in which a fault has occurred can be detached from the energy storage system 21A, the fault current continues to flow through the power storage unit 40 itself and the elements within the power storage unit 40 may be destroyed by overcurrent, etc., as shown in Fig. 6.

Fig. 6 is a diagram for illustrating a path of the fault current in the energy storage system 21A. Fig. 6 does not show the control device 22 and signal lines, for ease of illustration. Referring to Fig. 6, assume that a ground fault accident occurs at the power storage unit 40u of the power storage circuit 50_3. In this case, the fault current continues to flow through the power storage unit 40u, the ground, the neutral line 81, and the power storage unit 40u in the listed order. Therefore, the power storage unit 40u itself may be destroyed by overcurrent. Thus, in Variation 1 according to Embodiment 1, a configuration is described which can prevent the destruction of the power storage unit 40 itself in which a fault has occurred.

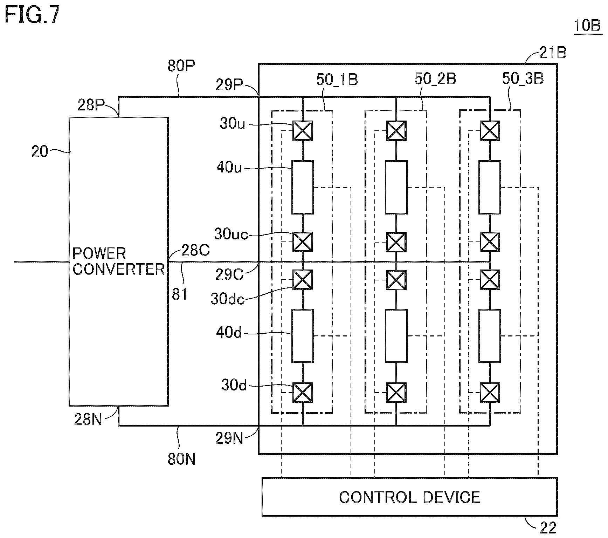

Fig. 7 is a block diagram showing a configuration of the power control system according to Variation 1 of Embodiment 1. Referring to Fig. 7, an energy storage system 21B of a power control system 10B includes multiple power storage circuits 50_1B, 50_2B, and 50_3B (hereinafter, also collectively referred to as "a power storage circuit 50B"), which are connected in parallel between the positive terminal 29P and the negative terminal 29N. The power storage circuit 50B has the same configuration as the power storage circuit 50A of Fig. 3, except for additionally including protection circuits 30uc and 30dc.

In the energy storage system 21B, the protection circuits 30u and 30uc are provided in correspondence with the power storage unit 40u, and the protection circuits 30d and 30dc are provided in correspondence with the power storage unit 40d.

The protection circuit 30uc is connected between the power storage unit 40u and the neutral line 81. Specifically, the protection circuit 30uc has an upper end connected to the power storage unit 40u. The protection circuit 30uc has a lower end connected to the neutral 28C of the power converter 20 via the terminal 29C and the neutral line 81. The protection circuit 30dc is connected between the power storage unit 40d and the neutral line 81. Specifically, the protection circuit 30dc has an upper end connected to the neutral 28C of the power converter 20 via the terminal 29C and the neutral line 81. The protection circuit 30ud has a lower end connected to the power storage unit 40d.

For example, assume that a fault occurs at the power storage unit 40u. The control device 22 detects an anomaly of the power storage unit 40u and outputs an open command to the corresponding protection circuits 30u and 30uc. This opens the respective switches 31 of the protection circuits 30u and 30uc, electrically disconnecting the power storage unit 40u from the neutral line 81. Accordingly, the path for the fault current as described with respect to Fig. 6 is blocked.

Note that the control device 22 may transmit the open command to the protection circuits 30dc, 30d to detach the power storage unit 40d from the energy storage system 21B in order to balance the power storage capacities above the neutral line 81 and the power storage capacities below the neutral line 81, as noted above.

According to the energy storage system 21B, the fault current when a ground fault accident has occurred at the power storage unit 40, or the fault current when a short-circuit fault has occurred between the power storage unit 40 and the neutral line 81 can be blocked. Therefore, the destruction of the power storage unit 40 itself can be prevented, in addition to the advantageous effects of the energy storage system 21A.

### (Variation 2)

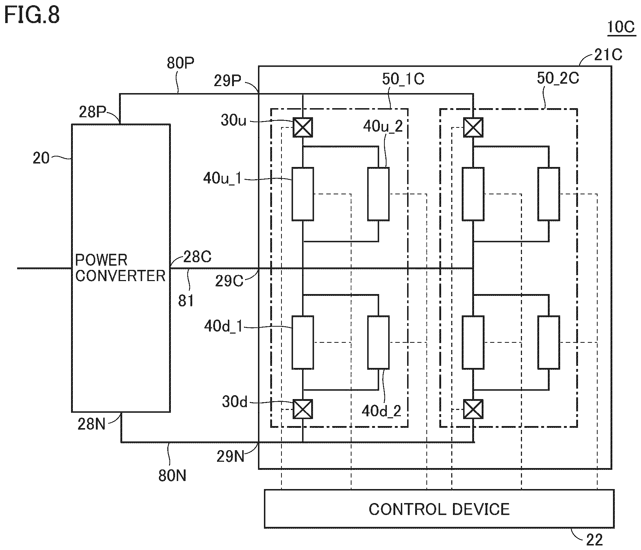

Fig. 8 is a block diagram showing a configuration of the power control system according to Variation 2 of Embodiment 1. Referring to Fig. 8, an energy storage system 21C of a power control system 10C includes multiple power storage circuits 50_1C and 50_2C (hereinafter, also collectively referred to as "a power storage circuit 50C"), which are connected in parallel between the positive terminal 29P and the negative terminal 29N. The power storage circuit 50C includes: a first group of power storage units, including power storage units 40u_1 and 40u_2; a second group of power storage units, including power storage units 40d_1 and 40d_2; and the protection circuits 30u and 30d. The first group of power storage units, the second group of power storage units, and the protection circuits 30u and 30d are connected in series.

The power storage unit 40u_1 and the power storage unit 40u_2 are connected in parallel, and the power storage unit 40d_1 and the power storage unit 40d_2 are connected in parallel. The first group of power storage units (i.e., the power storage units 40u_1 and 40u_2) has an upper end connected to the protection circuit 30u. The first group of power storage units has a lower end connected to the neutral 28C of the power converter 20 via the terminal 29C and the neutral line 81. The second group of power storage units (i.e., the power storage units 40d_1 and 40d_2) has an upper end connected to the neutral 28C via the terminal 29C and the neutral line 81. The second group of power storage units has a lower end connected to the protection circuit 30d.

In the energy storage system 21C, the protection circuit 30u is provided in correspondence with the first group of power storage units (i.e., the power storage units 40u_1 and 40u_2), and the protection circuit 30d is provided in correspondence with the second group of power storage units (i.e., the power storage units 40d_1, 40d_2). In other words, one protection circuit 30 is provided for two power storage units 40 comprising a group of power storage units.

For example, assume that a fault occurs at the power storage unit 40u_1. The control device 22 detects an anomaly of the power storage unit 40u_1 and outputs an open command to the corresponding protection circuit 30u. This causes the switch 31 of the protection circuit 30u to electrically disconnect the power storage units 40u_1 and 40u_2 from the power converter 20.

According to the energy storage system 21C, one protection circuit 30 is provided for multiple power storage units 40. Therefore, the number of protection circuits 30 is reduced, as compared to the energy storage system 21A. Therefore, the size and cost of the entire system can be reduced.

### (Variation 3)

Variation 3 has a configuration corresponding to the configurations of Variations 2 and 1 combined together.

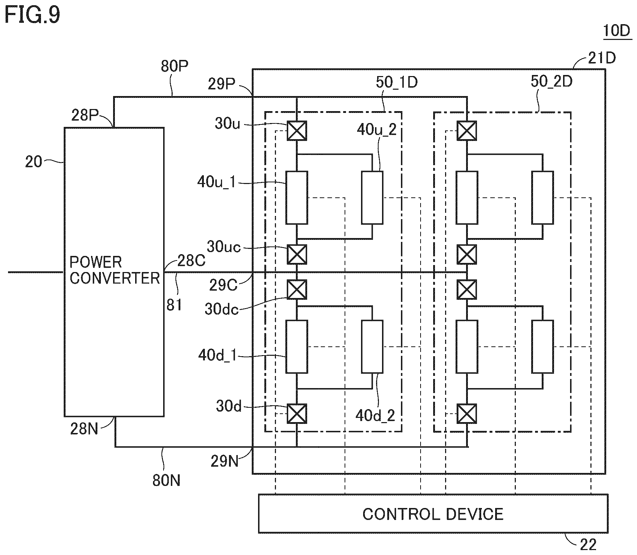

Fig. 9 is a block diagram showing a configuration of the power control system according to Variation 3 of Embodiment 1. Referring to Fig. 9, an energy storage system 21D of a power control system 10D includes multiple power storage circuits 50_1D and 50_2D (hereinafter, also collectively referred to as "a power storage circuit 50D"), which are connected in parallel between the positive terminal 29P and the negative terminal 29N. The power storage circuit 50D is the same as the power storage circuit 50C of Fig. 8, except for additionally including the protection circuits 30uc and 30dc.

In the energy storage system 21D, the protection circuits 30u and 30uc are provided in correspondence with the power storage units 40u_1 and 40u_2, and the protection circuits 30d and 30dc are provided in correspondence with the power storage units 40d_1 and 40d_2.

The protection circuit 30uc is connected between the power storage units 40u_1, 40u_2 and the neutral line 81. Specifically, the protection circuit 30uc has an upper end connected to first power storage units (i.e., the power storage units 40u_1 and 40u_2). The protection circuit 30uc has a lower end connected to the neutral 28C via the terminal 29C and the neutral line 81. The protection circuit 30dc is connected between a second group of power storage units (i.e., the power storage units 40d_1 and 40d_2) and the neutral line 81. Specifically, the protection circuit 30dc has an upper end connected to the neutral 28C via the terminal 29C and the neutral line 81. The protection circuit 30ud has a lower end connected to the second group of power storage units.

For example, assume that a fault occurs at the power storage unit 40u_1. The control device 22 detects an anomaly of the power storage unit 40u_1 and outputs an open command to the corresponding protection circuits 30u and 30uc. This opens the respective switches 31 of the protection circuits 30u, 30uc, electrically disconnecting the power storage units 40u_1 and 40u_2 from the neutral line 81.

The energy storage system 21D has the advantageous effects of the energy storage systems 21B and 21C.

### (Variation 4)

As described above, in order to increase the capacity of the energy storage system 21, it is common to increase the number of power storage units 40. Suppose that N is the number of power storage units that is needed to secure the capacity of the energy storage system 21 required in the power control system (provided that N is an integer of 2 or greater). At this time, in order to meet the system requirements even in the event of an anomaly in the power storage unit 40, it is contemplated to set the number of power storage units for the entirety of the energy storage system 21 to "N + M," where M is a redundant number of power storage units 40.

In the energy storage system 21 according to Variation 4, suppose that "M" is the number of power storage units 40 that are connected to one protection circuit 30. For example, if M = 1, one power storage unit 40 is connected to one protection circuit 30. This corresponds to the configurations illustrated by the power storage circuit 50A of Fig. 3 and the power storage circuit 50B of Fig. 7. Specifically, in the power storage circuit 50A, one power storage unit 40u is connected to one protection circuit 30u. In the power storage circuit 50B, one power storage unit 40u is connected to each of the protection circuits 30u and 30uc.

For example, if M = 2, two power storage units 40 are connected to one protection circuit 30. This corresponds to the configurations illustrated by the power storage circuit 50C of Fig. 8 and the power storage circuit 50D of Fig. 9. Specifically, in the power storage circuit 50C, two power storage units 40u_1 and 40u_2 are connected to one protection circuit 30u. In the power storage circuit 50D, two power storage units 40u_1 and 40u_2 are connected to each of the protection circuits 30u and 30uc.

The redundant number M may be quantitatively calculated from a failure rate of the power storage elements, for example, or may be arbitrarily increased according to design philosophies of the power control system. Setting the number of protection circuits 30 according to the redundant number M sets "M" to be the number of power storage units that are to be detached from the energy storage system 21 in the event of an anomaly in a certain power storage unit 40. In other words, the redundant number M is set to be the same as the number of power storage units that are allowed to be detached from the power converter 20 in the event of an anomaly in a certain power storage unit 40. Therefore, the energy storage system 21 can reserve the number N of power storage units which is required from the system, streamlining the number of protection circuits 30 required from the entire system.

Accordingly, even in the event of an anomaly in a certain power storage unit 40, the capacity demand of the energy storage system 21 can be filled and the size and cost of the protection circuit 30 can be reduced.

### Embodiment 2.

In Embodiment 1, the configuration has been described in which, if an anomaly of the power storage unit 40 is detected, the control device 22 transmits the open command to the corresponding protection circuit 30 to detach the power storage unit 40. In Embodiment 2, a configuration will be described in which a protection circuit 30 at least includes a fuse 33, and the fuse 33 is not blown out in the event of a fault at a busbar, but is blown out at the time of a fault of a power storage unit 40.

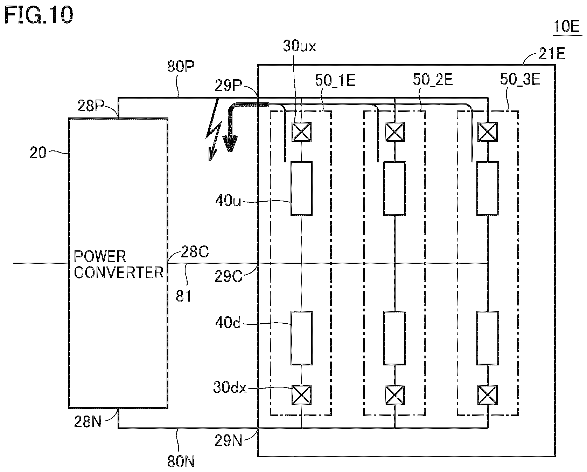

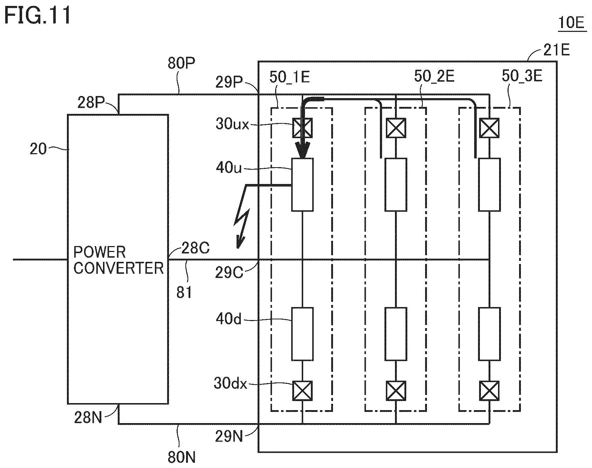

Figs. 10 and 11 are each a block diagram showing a configuration of a power control system according to Embodiment 2. Fig. 10 shows the path of a fault current at the time of a fault at a busbar (e.g., a positive busbar 80P). Fig. 11 shows the path of a fault current in the event of a fault within the power storage unit 40.

Referring to Fig. 10, an energy storage system 21E of a power control system 10E is the same as the energy storage system 21 of Embodiment 1, except that a control device 22 is not connected to the respective protection circuits 30 and the respective power storage units 40 through signal lines.

The energy storage system 21E includes multiple power storage circuits 50_1E, 50_2E, and 50_3E (hereinafter, also collectively referred to as "a power storage circuit 50E"), which are connected in parallel between a positive terminal 29P and a negative terminal 29N. The power storage circuit 50E includes protection circuits 30ux and 30dx and power storage units 40u and 40d. The protection circuits 30ux and 30dx are the same as the protection circuits 30u and 30d, except that the protection circuits 30ux and 30dx are each configured of the fuse 33 of Fig. 5 only.

As a fault related to the energy storage system, there are, primarily, a busbar fault which occurs at a busbar (e.g., the positive busbar 80P or a negative busbar 80N) connecting between the power converter 20 and the power storage circuit 50, and a power storage unit fault which occurs within the power storage unit 40.

As shown in Fig. 10, in the event of a fault at the positive busbar 80P, a fault current flows from each power storage unit 40 toward the fault point of the positive busbar 80P. In this case, the current flowing through the protection circuit 30ux is supplied from the power storage unit 40 connected to the protection circuit 30ux.

As shown in Fig. 11, in contrast, in the event of a fault at the power storage unit 40u of the power storage circuit 50_1E, a fault current flows from other healthy power storage units 40 (e.g., the power storage units 40 of the power storage circuits 50_2E and 50_3E) toward the fault point of the power storage unit 40u. In this case, the total current of the other healthy power storage units 40 flows through the protection circuit 30ux that is connected to the power storage unit 40u at which the fault has occurred.

Accordingly, it can be understood that the current that flows through the protection circuit 30ux connected to the power storage unit 40u in the event of a fault at the power storage unit 40u is greater than the current that flows through the protection circuit 30ux in the event of a busbar fault.

Thus, in Embodiment 2, a threshold Th for a current causing the fuse 33 to be blown out is set such that the fuse 33 is blown out in the event of a fault at the power storage unit 40u, while the fuse 33 is not blown out in the event of a busbar fault.

Specifically, the threshold Th is set greater than the current value of the fault current that flows into the fuse 33 from the power storage unit 40 (e.g., the power storage unit 40u of the power storage circuit 50_1E) connected to the fuse 33 in the event of a fault at the busbar (e.g., the positive busbar 80P). Due to this, the fuse 33 connected to the power storage unit 40 is not blown out even in the event of a busbar fault. Since the busbar is faulty at the time of a busbar fault, the operation of the power control system is impossible to continue anyway. Accordingly, an instrument design that can prevent destruction of the power converter 20 even at the time of a busbar fault causes little impact on the system operation even though the fuse 33 is not blown out. Moreover, since the fuse 33 is not blown out, only the busbar may be recovered, obviating the need for replacement of the fuse 33.

Furthermore, the threshold Th is set less than or equal to the current value of the fault current that flows, in the event of a fault at the power storage unit 40 (e.g., the power storage unit 40u of the power storage circuit 50_1E) connected to the fuse 33, into the fuse 33 from other healthy power storage units 40 (e.g., the power storage units 40u of the power storage circuits 50_2E and 50_3E). This causes blowout of the fuse 33 connected to the power storage unit 40 at which the fault has occurred, thereby detaching the power storage unit 40 from the power converter 20 and the energy storage system 21E. Note that, in this case, only a current as much as the current at the time of a busbar fault flows through the fuses 33 connected to the healthy power storage units 40, and these fuses 33 are, therefore, not blown out. In other words, the healthy power storage units 40 are not detached from the power converter 20 and the energy storage system 21E.

According to Embodiment 2, at the time of a fault of the power storage unit, the power storage unit 40 at which the fault has occurred is promptly and spontaneously detached from the energy storage system 21E, thereby minimizing the impact on the system. In addition, there is no need to replace the fuses for the recovery from a busbar fault.

### (Variation)

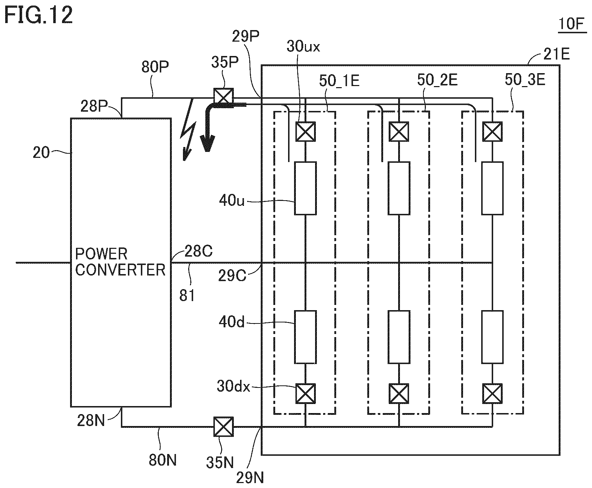

Fig. 12 is a block diagram showing a configuration of the power control system according to Variation of Embodiment 2. Referring to Fig. 12, a power control system 10F is the same as the power control system 10E of Fig. 11, except for additionally including busbar protection circuits 35P and 35N.

The busbar protection circuit 35P is disposed on the positive busbar 80P, and the busbar protection circuit 35N is disposed on the negative busbar 80N. The busbar protection circuits 35P and 35N each may be configured of the fuse 33 only, switch 31 only, or a combination of the fuse 33 and the switch 31. If the busbar protection circuits 35P and 35N each include the switch 31, an open command is output, in the event of a busbar fault, from the control device 22 to the switch 31. For example, the control device 22 receives the current value detected by a current detector (not shown) disposed on the busbar, and outputs the open command to the switches 31 if the current value is greater than or equal to a specified value (i.e., if overcurrent of the busbar is detected).

At the time of a busbar fault, the operation of the power control system is impossible to continue even if the overcurrent is blocked by the operations of the busbar protection circuits 35P and 35N. However, if the busbar protection circuits 35P and 35N are not operational, the overcurrent cannot be blocked. Thus, an instrument design for the power converter 20 that can withstand the overcurrent is necessary. Thus, in this variation, the busbar protection circuits 35P and 35N block the overcurrent at the time of a busbar fault. This can prevent overdesign of the power converter 20.

Note that, if the busbar protection circuits 35P and 35N are arranged as shown in Fig. 12, there is no protection against a fault occurred on the connection line between the power storage circuits 50E. However, typically, the connection line is physically short, and the probability of a fault is higher on busbars (i.e., the positive busbar 80P and the negative busbar 80N) in the section ranging from the power converter 20 to the energy storage system 21E. Thus, providing the protection circuits on the busbars allows reasonable protection. If the connection line between the power storage circuits 50E is extended due to the restrictions of installation conditions, etc., the protection circuits may be disposed on the connection line.

### Other Embodiments.

(1) In the embodiments described above, the configuration having the neutral line 81 has been described. The configuration may not have the neutral line 81.

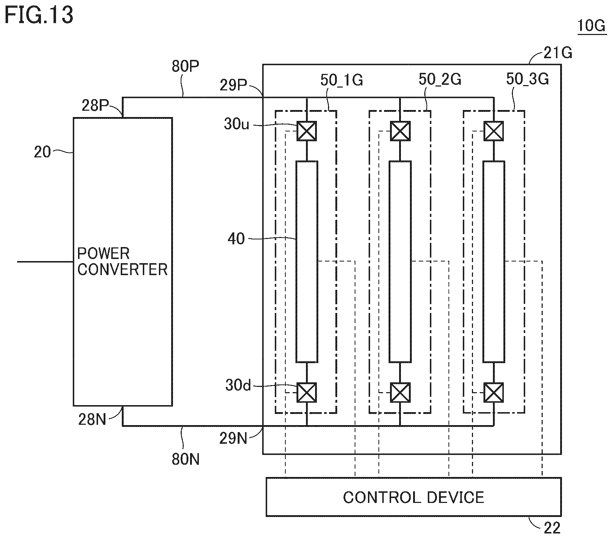

Fig. 13 is a block diagram showing a configuration of a power control system 10G according to other embodiment. Referring to Fig. 13, an energy storage system 21G of the power control system 10G includes multiple power storage circuits 50_1G, 50_2G, and 50_3G (hereinafter, also collectively referred to as "a power storage circuit 50G") between a positive terminal 29P and a negative terminal 29N. The power storage circuit 50G includes protection circuits 30u and 30d and a power storage unit 40. In the energy storage system 21G, the protection circuits 30u and 30d are provided in correspondence with the power storage unit 40.

For example, assume that a failure occurs at the power storage unit 40 of the power storage circuit 50_1G. The control device 22 detects an anomaly of the power storage unit 40, and outputs an open command to the protection circuits 30u and 30d. This detaches the power storage unit 40 of the power storage circuit 50_1G from the energy storage system 21G and the power converter 20.

Note that multiple power storage units 40 connected in parallel may be provided for one protection circuit 30 like the configuration of Fig. 8.

(2) Embodiments 1 and 2 described above may be combined. Specifically, the fuse 33 having the threshold Th as described in Embodiment 2 may be employed as the fuse 33 of the protection circuit 30 according to Embodiment 1.

(3) The configurations exemplified as the above-described embodiments are one example configuration of the present disclosure, and can be combined with other known technique, or can be modified, such as part of the configuration being omitted, without departing from the gist of the present disclosure. Moreover, in the above-described embodiments, the processes and configurations described in the other embodiments may be appropriately adapted and implemented.

The presently disclosed embodiments should be considered in all aspects as illustrative and not restrictive. The scope of the present disclosure is indicated by the appended claims, rather than by the description above, and all changes that come within the scope of the claims and the meaning and range of equivalency of the claims are intended to be embraced within their scope.

### REFERENCE SIGNS LIST

10, 10A to 10G power control system; 15 AC power system; 17 point of interconnection; 20 power converter; 21, 21A to 21E, 21G energy storage system; 22 control device; 23 transformer; 24 AC voltage detector; 25 AC current detector; 26 DC voltage detector; 28C neutral; 28N negative-side DC terminal; 28P positive-side DC terminal; 29C terminal; 29N negative terminal; 29P positive terminal; 30 protection circuit; 31 switch; 33 fuse; 35N, 35P busbar protection circuit; 40 power storage unit; 41 power storage element; 43 signal communication unit; 50 power storage circuit; 55 circuit breaker; 70 input converter; 71 sample and hold circuit; 72 multiplexer; 73 analog-to-digital converter; 75 RAM; 76 ROM; 77 I/O interface; 78 auxiliary storage; 79 bus; 80N negative busbar; 80P positive busbar; and 81 neutral line.

## Claims

1. A power control system, comprising:
an energy storage system to store a direct-current power input via a pair of input and output terminals as an energy, and output the energy via the pair of input and output terminals; and
a power converter connected between an alternating-current power system and the pair of input and output terminals of the energy storage system, wherein
the energy storage system includes a plurality of power storage circuits which are connected in parallel between one of the pair of input and output terminals and the other one of the pair of input and output terminals, wherein
the power storage circuit includes:
one or more power storage units; and
a protection circuit provided in correspondence with the power storage unit, the protection circuit being connected between the power storage unit and the power converter, wherein
in an event of an anomaly at corresponding the power storage unit, the protection circuit electrically disconnects the power storage unit from the power converter.

2. The power control system according to claim 1, wherein
the one or more power storage units are a plurality of power storage units,
the plurality of power storage units are configured of a first power storage unit and a second power storage unit which are connected in series,
the protection circuit connected to one end of the first power storage unit is connected to a positive-side direct-current terminal of the power converter, and the protection circuit connected to the other end of the first power storage unit is connected to a neutral of the power converter, and
the protection circuit connected to one end of the second power storage unit is connected to the neutral of the power converter, and the protection circuit connected to the other end of the second power storage unit is connected to a negative-side direct-current terminal of the power converter.

3. The power control system according to claim 1, wherein
the one or more power storage units are a plurality of power storage units, and
the plurality of power storage units are connected in parallel.

4. The power control system according to claim 3, wherein
a total number of the plurality of power storage units is the same as a total number of the power storage units that are allowed to be detached from the power converter in the event of the anomaly at the power storage unit.

5. The power control system according to claim 1, wherein
the one or more power storage units are a plurality of power storage units,
the plurality of power storage units include a first group of power storage units and a second group of power storage units, which are connected in series,
the first group of power storage units and the second group of power storage units each include two or more power storage units connected in parallel,
the protection circuit connected to one end of the first group of power storage units is connected to a positive-side direct-current terminal of the power converter, and the protection circuit connected to the other end of the first group of power storage units is connected to a neutral of the power converter, and
the protection circuit connected to one end of the second group of power storage units is connected to the neutral of the power converter, and the protection circuit connected to the other end of the second group of power storage units is connected to a negative-side direct-current terminal of the power converter.

6. The power control system according to any one of claims 1 to 5, further comprising
a control device to monitor states of the one or more power storage units included in each of the plurality of power storage circuits, wherein
when the control device detects an anomaly at one power storage unit among the one or more power storage units, the control device transmits command information, for electrically disconnecting the one power storage unit from the power converter, to the protection circuit corresponding to the one power storage unit.

7. The power control system according to claim 6, wherein
the power storage unit includes:
a plurality of power storage elements; and
a signal communication unit to obtain state signals indicating states of the plurality of power storage elements, wherein
the signal communication unit calculates a representative value representing the states of the plurality of power storage elements, based on the state signals of the plurality of power storage elements, and transmits the representative value to the control device, and
the control device detects a presence or absence of an anomaly at the power storage unit based on the representative value.

8. The power control system according to any one of claims 1 to 7, wherein
the protection circuit is configured of a fuse and a switch which are connected in series.

9. The power control system according to claim 8, wherein
when a current greater than or equal to a threshold flows through the fuse, the fuse is blown out,
the threshold is less than or equal to a current value of a fault current that flows, in an event of a fault at a power storage unit connected to the fuse, into the fuse from other healthy power storage units, and
the threshold is greater than the current value of the fault current that flows into the fuse from the power storage unit in an event of a fault at a first busbar connecting the one of the pair of input and output terminals and the power converter.

10. The power control system according to any one of claims 1 to 7, wherein
the protection circuit includes a fuse which is blown out when a current greater than or equal to a threshold flows through the fuse, wherein
the threshold is less than or equal to a current value of a fault current that flows, in an event of a fault at a power storage unit connected to the fuse, into the fuse from other healthy power storage units, and
the threshold is greater than the current value of the fault current that flows into the fuse from the power storage unit in an event of a fault at a first busbar connecting the one of the pair of input and output terminals and the power converter.

11. The power control system according to claim 9 or 10, further comprising:
a first busbar protection circuit disposed on the first busbar; and
a second busbar protection circuit disposed on a second busbar connecting the other one of the pair of input and output terminals of the energy storage system and the power converter, wherein
the first busbar protection circuit and the second busbar protection circuit each include the fuse.
